Europäisches Patentamt

European Patent Office

Office européen des brevets

(11) Veröffentlichungsnummer: **0 289 038 B1**

(12) **EUROPÄISCHE PATENTSCHRIFT**

(45) Veröffentlichungstag der Patentschrift: **18.03.92**

(21) Anmeldenummer: **88106900.9**

(22) Anmeldetag: **29.04.88**

(51) Int. Cl.⁵: **E04B  1/49**

(54) **Verbindung für Bauteile aus Gasbeton.**

(30) Priorität: **30.04.87 DE 3714537**

(43) Veröffentlichungstag der Anmeldung:
**02.11.88 Patentblatt  88/44**

(45) Bekanntmachung des Hinweises auf die
Patenterteilung:
**18.03.92 Patentblatt  92/12**

(84) Benannte Vertragsstaaten:
**AT CH FR GB LI NL**

(56) Entgegenhaltungen:
**EP-A- 0 212 315**
**DE-A- 1 534 699**
**FR-A- 1 117 375**
**FR-A- 1 391 693**
**US-A- 4 318 652**

(73) Patentinhaber: **Sell, Rudolf, Dr.-Ing.**
**Seebenseestrasse 14**
**W-8000 München 70(DE)**

(72) Erfinder: **Sell, Rudolf, Dr.-Ing.**
**Seebenseestrasse 14**
**W-8000 München 70(DE)**

**Beschreibung**

Die Erfindung betrifft eine Formschlüssige Verbindung zwischen Gasbeton und einer Metallasche mit Ankerelementen.

Aus dem leichten Baustoff Gasbeton werden nicht nur hochwertige, wärmedämmende Bausteine für Gasbeton-Mauerwerk hergestellt, sondern auch bewehrte Bauteile für Wand-, Decken- und Dachkonstruktionen. Derartige Bauteile müssen auf der Baustelle zusammengefügt werden. Bei den Deckenplatten werden bewehrte Elemente erst auf der Baustelle zu einer Decke zusammengebaut, indem in die Fugen Mörtel, mitunter auch Betonstahl, zur gegenseitigen Verbindung eingebracht wird.

Für Dach- und Wandplatten sind durch GM 19 88 755 Verbindungsbleche bekannt geworden, die Platten miteinander verbinden bzw. Platten an einer Tragkonstruktion anschließen. Diese Blechstreifen sind durch wenigstens zwei Gruppen mit wenigstens je zwei durch Stanzen und Abkanten hergestellten, herausragenden Spitzen gekennzeichnet. Diese Spitzen sind auf Grund ihrer Form und Abmessungen aber kaum in der Lage, nennenswerte Kräfte zu übertragen und sind auch kaum in der Lage, einen Biegewiderstand auszuüben. Sie stellen somit keine Vorrichtung zum Festlegen dar, was auch daraus hervorgeht, daß eigens Nägel oder Schrauben verwendet werden, um den Halt und die Verbindung mit der Tragkonstruktion herzustellen. Die "abgebogenen Spitzen" stellen keine Elemente dar, die eine definierte Kraftübertragung sicherstellen würden. Sie können nicht als Verankerungselemente gelten, womit ein statisches Zusammenwirken oder eine Last übertragbar wäre.

Zur Sicherstellung eines Zusammenwirkens von horizontalen Deckenplatten mit vertikalen Wandelementen müssen an Ort und Stelle Verbindungen hergestellt werden, so daß die Deckenscheibe mit den Wänden eine räumlich steife Einheit bildet. Auch bei geneigten Dachplatten ist es zur Erzielung eines statischen Zusammenwirkens im Sinne einer Scheibe notwendig, daß eine Verbindung der Platten untereinander hergestellt wird, um ein gegenseitiges Verschieben der Einzelplatten zu verhindern. Zu den derzeitigen Mittel gehört in erster Linie das Ausmörteln der Fugen, die Anordnung von bewehrten Ringankern, die vernähung mittels Bewehrungsstählen und Beton, so daß eine Verdübelungswirkung der Platten untereinander zustandekommt.

In der FR-A-1 117 375 sind Verbindungselemente bekannt gemacht, die in die Stoßfugen von Gasbetondecken- oder -dachscheiben nach der Verlegung eingetrieben werden und verhindern, daß die sich berührenden Plattenränder gegeneinander verschieben können, also im Sinne einer Verdübelung in der Plattenebene wirkende Querkräfte übertragen und somit eine Schubverbindung der Platten bewerkstelligen. Verbindungsmittel der genannten Art zeichnen sich dadurch aus, daß sie aus einem Metallband bestehen, aus dem beidseitige Flügel ("Ankerelemente") ausgestanzt und im Wechsel etwa rechtwinklig einmal zur einen, das andere Mal zur anderen Seite abgebogen sind. Diese Metallbänder sollen erfindungsgemäß mit ihren Längsseiten stehend in die Stoßfuge der Gasbetonplatten eingetrieben werden, wobei die rechteckförmigen Querschnittflächen der ausgestanzten Flügel den ausgehärteten Gasbeton durchtrennen müssen, wie eines Messers Schneide. Dies bedarf hoher Kräfte, je mehr dieser Ankerelemente gleichzeitig in den Gasbeton eingedrückt werden müssen. Mit den üblichen Mitteln der Baustelle ist dies gar nicht zu bewerkstelligen, da der Reibungswiderstand mit zunehmender Setztiefe und der Länge des Verbindungselements zunimmt, sodaß die Knickstabilität der schlanken Flügel überschritten wird und ein Ausknicken und Verformen eintritt.

Voraussetzung für die praktische Anwendung des Verbindungselements nach FR-A-1 117 375 zur Schubverdübelung von Gasbetonplatten ist, daß die in den Gasbeton eingreifenden, beidseitigen Flügel des Metallbandes spielfrei eingespannt sind, sowohl im Metallband, als auch im Gasbeton, weil sie nur dann einen starren, mechanischen Formschluß eingehen. Nur dann, wenn die Flügel in sich, als auch das Metallband, unter dem beim Einbau notwendigen Druck eben bleiben, kommt eine Schubverdübelung zustande. Die äußere Druckkraft zum Eintreiben greift in der Ebene des Metallbands an, die Widerstandskräfte dazu ausmittig an den Flügeln. Das Metallband unterliegt deshalb einer Verwindung, bei einem sehr kleinen Verwindungswiderstand. Es ist deshalb anzunehmen, daß bei dem hohen, notwendigen Einpreßdruck das Metallband sich so verformt, daR die Voraussetzungen für die praktische Anwendung nicht erfüllt sind.

Es sind auch Verbindungselemente bekannt, die in den Fugen der Platten eingelassen werden etwa in der Weise, daß man symmetrisch zur Stoßfuge eine kreisförmige Kernbohrung herstellt, den Kern entnimmt und an seiner Stelle einen aushärtenden Mörtel eingießt, der gewährleistet, daß sich die beiden Längsränder der Platten nicht mehr gegeneinander verschieben können. Derartige dübelähnliche Ausmörtelungen sind jedoch sehr zeit- und kostenaufwendig, wie überhaupt jegliches Betonieren oder Ausmörteln mit dem eigentlichen Prinzip des Bauens mit Fertigteilen nicht im Einklang steht. Besteht doch ein wesentlicher Vorteil des Bauens mit Fertigteilen darin, daß man die Bauteile in den erforderlichen Abmessungen auf die Baustelle transportiert und dort ohne Zwischenlagerung zu einem Bauwerk zusammenfügt. Jegliche Ausmörtelungen, die Wartezeiten bis zur Erhärtung des Mörtels bedingen, führen zu zeitlichen Verzögerungen und Minderung des Wärmedurchlaßwiderstandes der Gasbetonkonstruktion.

Für das Bauen mit bewehrten Bauteilen aus Gasbeton bedeutet es einen wesentlichen wirtschaftlichen Nachteil, wenn zeitaufwendige, arbeitsintensive bewehrte Betonverbindungen ausgeführt werden müssen. Die Herstellung eines Bauwerks Zug um Zug, ohne Wartezeiten, läßt sich mit den bekannten Verbindungsmitteln nicht erreichen.

Die Erfindung hat es sich somit zur Aufgabe gemacht, für Bauteile aus Gasbeton ein neuartiges Verbindungselement zu schaffen, das ohne Bohrarbeit versetzbar ist, die Nachteile Bekannter Verbindungselemente behebt, an der Bauteiloberfläche ohne nennenswerten Überstand mit auf der Baustelle verfügbaren Mitteln festlegbar ist, eine sofortige Belastung ohne Wartezeiten zuläßt, mit einfachen Mitteln rationell ausführbar ist und sich auch für die Herstellung von Verbindungen zu anderen Bauteilen aus Beton, Stahl, Mauerwerk, Holz und dergl. universell verwendbar ist.

Die gestellte Aufgabe für Bauteile aus Gasbeton eine Verbindung zu schaffen wird mit einer dünnen Metallasche mit Ankerelementen gelöst, mit den den Teil des Hauptanspruchs beschriebenen Mitteln und Merkmalen.

Die Erfindung macht sich die Erkenntnis zunutze, daß eine äußere auf das Gasbetonbauteil einwirkende Kraft umso mehr verteilt werden muß, je geringer die Dichte und Festigkeit des Materials ist, in welches sie eingetragen wird. Die geschlossenzellige Materialstruktur des Gasbetons, dessen Porenvolumen ca. 70 % beträgt, ist ungeeignet konzentrierte Lasten aufzunehmen. Daher kommt es darauf an, daß eine Lastverteilung bereits an der Lasteinleitungsstelle zustande kommt.

Nach der Erfindung wird die Last auf eine Vielzahl von Einleitungspunkten, die miteinander verbunden sind, verteilt. Am Einleitungspunkt wird sie durch stabförmige in sich biegesteife Ankerelemente mit Spitze in die Tiefe eingeleitet und verteilt. Durch das Eindrücken der Ankerelemente in den Gasbeton wird sein Gefüge örtlich verdichtet, weil die getroffenen Poren zerstört werden. So entsteht eine steife Bettung für das Ankerelement, das dadurch auch in der Lage ist, spezifisch höhere Lastanteile in die Tiefe, über die Länge des Elements einzutragen. Ganz wesentlich ist, daß das Ankerelement so dimensioniert ist, daß es sich unter der Beanspruchung in sich nicht verbiegt. Da es im Gasbeton eine Einspannung erfährt und an der Lasche selbst schub- und biegesteif angeschlossen ist, stellen Lasche und Ankerelemente eine Einheit dar, die bei Belastung durch Kräfte in der Laschenebene kaum Verschiebungen zur Folge haben. Die Verbindung gilt als ausgesprochen steif, wodurch sie sich von genagelten Laschen grundsätzlich unterscheidet.

Bei Nägel, die durch Ausnehmungen, Bohrungen oder dergl. in der Lasche geschlagen sind, bedarf es erst einer Verschiebung ehe die Nägel Querkräfte übertragen, weil der Nagel sich gegenüber der Lasche verdrehen kann. Die Grundlage der Erfindung stellt daher die Einspannung der in sich biegesteifen stabförmigen Ankerelemente im Gasbeton und in der sie integrierenden Lasche dar.

Für eine besondere Ausgestaltung des Erfindungsgegenstandes als Krallenlasche 3 ist im Unteranspruch 2 Schutz beantragt. Aus Laschen durch Stanzung angeformte Ankerelemente in Form von Krallen sind an sich im Holzbau als Krallenplatten bekannt. Es wurde jedoch bisher nicht erkannt, daß Krallenplatten in der besonderen Ausführung mit den angegebenen Merkmalen auch als Verbindungsmittel für Gasbetonbauteile verwendet werden können. Erst durch systematische Versuche konnte gefunden werden, daß für die unter Schutz gestellte Ausführung eine Eignung für Gasbeton besteht.

Einzelheiten des Erfindungsgegenstandes, seiner Ausgestaltung und seiner Verwendung gehen aus den zeichnerisch dargestellten Beispielen hervor, wie sie in den Unteransprüchen beschrieben sind. Im einzelnen zeigen:

Fig. 1:      Isometrische Darstellung eines erfindungsgemäßen Verbindungselementes aus Ankerelementen 2 mit kreisrundem Querschnitt eingespannt auf der dünnen Metallasche 1;

Fig. 2:      Beispiel für die Ausführung eines erfindungsgemäßen Verbindungselementes in Form einer Krallenlasche 3 mit angeformter Halterung 5 für die Verwendung als Wandanker;

Fig. 3:      Draufsicht auf eine Krallenlasche 3 mit einer angeformten Anschlußeinrichtung 6 zur Aufnahme eines Ringankers 8, Beispiel für die Ausführung einer Endverankerung eines Zuggliedes;

Fig. 4:      Beispiel für die Gestaltung einer Krallenlasche mit Krallen auf beiden Lagerflächen, verwendbar als Verdübelungselement in der Stoßfuge von Dach-, Decken- und Wandplatten, vergl. Fig. 9;

Fig. 5:      Kreuzriß der in Fig. 4 dargestellten Krallenplatte 3;

Fig. 6:      Schnitt durch ein Decken-Wandauflager; Beispiel für die Verbindung von Deckenbauteilen 14 mit Wandbauteilen 12 mittels einer in der Stoßfuge angeordneten, erfindungsgemäßen Lasche mit krallenfreier Zone 15 und Zugglied 8 als Ringanker;

Fig. 7: Grundriß der in Fig. 2 dargestellten Ausführung eines Wandankers, eingebaut an der Stoßfuge zweier Wandbauteile 12, verankert im Anschlußteil 11 einer Stahlbetonstütze 10;

Fig. 8: Draufsicht auf einen Dachscheibenausschnitt am mittleren Auflager, mit Krallenlaschen 15, zur Erzielung einer Durchlaufwirkung der Deckenbauteile 14;

Fig. 9: Draufsicht auf die Decken- oder Dachfläche im Ausschnitt - Beispiel für die Verwendung von Krallenlaschen 15 zur Herstellung einer Schubverdübelung der Dach- bzw. Deckenbauteile 14;

Fig. 10: Beispiel für die Verbindung einer Krallenlasche 3 mit Anschlußeinrichtung in Form eines Falzes 6 mit einem Zugglied 8, unter Verwendung von Keilen 7;

Fig. 11: Horizontaler Schnitt durch eine zweischalige Außenwand 18, verbunden durch Luftschichtanker 13;

Fig. 12: Beispiel eines Luftschichtankers 13 in isometrischer Darstellung zur zug- und druckfesten Verbindung einer vorgeblendeten Außenwandschale 16 mit Gasbetonwandbauteilen 12.

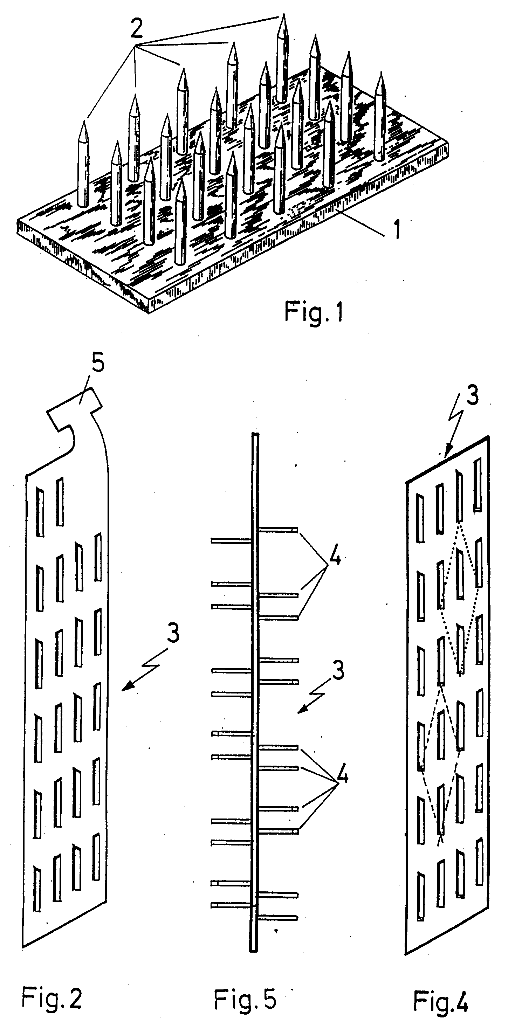

Bei dem in Fig. 1 dargestellten Verbindungsmittel handelt es sich um eine erfindungsgemäße Ausführungsform einer dünnen Metallasche 1, die auf einer Lagerfläche Ankerelemente 2 von kreisrundem Querschnitt und einer Spitze bestückt ist. Die Ankerelemente 2 sind so ausgebildet, daß sie sich in der Oberfläche des Gasbetonbauteils durch Eintreiben festlegen lassen. Dabei entsteht ein mechanischer Formschluß, der das Verbindungselement mit der Fähigkeit ausstattet, Kräfte parallel zur Laschenebene zu übertragen.

Die Ankerelemente sind nach der Erfindung so ausgebildet, daß sie nach dem Festsetzen im Gasbeton eine örtliche Verfestigung der durchsetzten Betonzone dadurch herstellen, daß sie durch Materialverdrängung unmittelbar am Ankerelement eine Gefügeverdichtung erzeugen. Dies ist jedoch nur dann realisierbar, wenn die Form des Ankerelementes zur Materialverdichtung führt und das Verdrängungsvolumen auf den Abstand der Ankerelemente abgestimmt ist, um keine Spaltzug-Risse im übrigen Gasbetongefüge hervorzurufen. Daher muß das Volumen eines Ankerelementes auf das Porenvolumen des Gasbetons so abgestimmt sein, daß es bei dem gewählten Abstand der Ankerelemente zu keiner Zerstörung des Gasbetons in sich kommt. Die Erfindung erteilt im Anspruch 1 die Lehren hinsichtlich der einzuhaltenden Abmessungen der Ankerelemente und deren Abstand untereinander.

Das Grundprinzip des Erfindungsgegenstandes ist vergleichbar mit der Konstruktion einer Pfahlgründung, wo die Pfahlköpfe mittels einer starren Scheibe so miteinander verbunden sind, daß Scherkräfte in der Scheibenebene Mantelpressungen der Pfähle im Baugrund erzeugen. Dabei kommt der durch die Materialverdrängung bedingten Gefügeverdichtung, gleichermaßen wie im Baugrund, eine lastverteilende Bedeutung zu. Die Einspannung der Pfahlköpfe in der lastverteilenden, integrierenden Scheibe ist hierbei nicht minder bedeutsam. Zum einen bewirkt die Scheibe eine Führung der Krallenköpfe beim Eintreiben, zum anderen bewirkt die Einspannung eine Verminderung der Verbiegung. Daher sind auf eine Lasche stumpf aufgeschweißte Ankerelemente in einem höheren Gerade eingespannt als durch Stanzung aus der Lasche umgeformte Krallen. Krallenplatten, wie sie an sich bekannt sind und im Holzbau Verwendung finden, können sich unter bestimmten Voraussetzungen durchaus dazu eignen, die Aufgabe der Erfindung mit zu übernehmen. Insbesondere bedarf es der genügend langen Einbindung der Krallen in den Gasbeton, um eine Einspannung im Gasbeton zu erzielen. Nur kurz einbindende Krallen mit geringer Biegesteifigkeit besitzen nur eine geringe, anteilige Lastaufnahme, weil sie keine Einspannung im Gasbeton erfahren und sich unter der angreifenden Last verdrehen.

Die Ankerelemente 2 besitzen erfindungsgemäß eine Länge, die mindestens das 10-, maximal das 20fache der Laschendicke d ist. Sie besitzen einen Querschnitt in der Größenordnung von $1,5 \ d^2$ bis $3 \ d^2$ und haben eine Dichte im Abstand in der Größenordnung von $10 \ d^2$ bis $20 \ d^2$.

Bei dieser engen Stellung der Ankerelemente 2 findet gewissermaßen eine Druckvorspannung des Gasbetons zwischen den Ankerelementen 2 statt, sodaß die gesamte, von den Ankerelementen 2 gebildete Fläche, als Lasteintragungsfläche wirksam wird. Gleichzeitig wird durch die Biegesteifigkeit der Elemente und ihre Einspannung in der Lasche erreicht, daß auch in der Tiefe, die der Länge der Ankerelemente entspricht, die Lasteintragung stattfindet. Die äußere Last wird somit auf ein Gasbetonvolumen, das durch die Grundfläche der Ankerelemente und ihrer Höhe repräsentiert wird, übertragen. Damit ist man in der Lage durch entsprechende Vervielfältigung der Ankerelemente - Vergrößerung der Ankerfläche - sich den Erfordernissen hinsichtlich der angreifenden äußeren Lasten und deren Verankerung anzupassen. Längere Ankerelemente verursachen einen höheren Widerstand beim Eintreiben und vermögen die Belastbarkeit nicht im gleichen Umfang zu steigern. Untersuchungen haben gezeigt, daß bei den angegebenen Abmessungen und Dichte im Abstand eine für Gasbeton der Fertigkeitsklasse 2 bis 5 N/mm² eine Optimierung gegeben ist.

Die Laschendicke d läßt sich bei der Ausführung als Krallenlasche auf 1,5 mm minimieren. Größere Dicken als 5 mm wird man auch bei anderen Ausführungen nicht wählen, da sie ein Einlassen in die Oberfläche des Gasbetons erfordern.

In Fig. 2 ist ein Beispiel für eine andere Ausführungsform des Verbindungselementes dargestellt, bei der die Ankerelemente 2 als an die Lasche angeformte durch Stanzung aus der Lasche gebildete Krallen 4 besteht. Dabei haben die Krallen zwangsläufig einen quadratischen bis rechteckförmigen Querschnitt, der naturgemäß über die längere Querschnittseite die höhere Biegesteifigkeit ergibt. Dennoch sieht die Erfindung auch den Einbau der Krallenlasche 3 in jener Form vor, wo die Breitseite der Krallen in der Hauptbeanspruchungsrichtung wirksam wird, wie aus der Darstellung in Fig. 5 erkennbar wird.

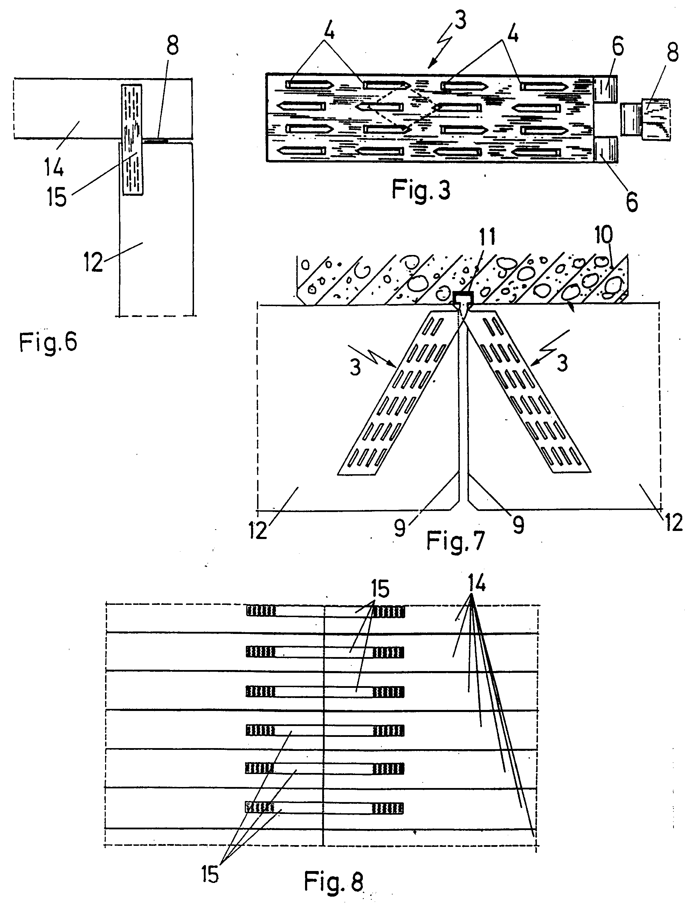

Abweichend von der rechteckigen bzw. quadratischen Laschenform ist eine parallelogrammförmige Lasche im Einzelfall von Vorteil. So erweist sich die in Fig. 2 dargestellte Laschenform als sehr nützlich, wenn auf einer Schmalseite eine Halterung 5 angeformt ist. Dies verdeutlicht die in Fig. 7 dargestellte Verwendung als Wandanker. Mit einer derartigen Lasche läßt sich eine Verbindung auch noch an der Bauteilecke vornehmen, wie sie am Beispiel eines Wandplatten-Stoßes und dessen Festlegung an einer Stahlbetonstütze 10 gezeigt wird. Die Halterung 5 wird in ein Anschlußteil 11 eingesetzt und die Lasche in die Oberfläche der Wandplatten-Lagerfuge eingetrieben. Durch den Formschluß der Halterung im Anschlußteil und der Festlegung der Lasche im Wandbauteil 12 ist eine Verbindung zwischen Wand und Betonstütze hergestellt. Dies läßt sich sowohl mit Krallenlaschen 3 mit nur einseitiger Anordnung von Krallen als auch mit beidseitiger Anordnung von Krallen vornehmen, so daß in einer Fuge die untere und die darüberliegende Wandplatte gleichzeitig gehalten werden.

In Fig. 3 sind die Spitzen der Krallen als symmetrische Dachschneide ausgebildet. Sie sind in einer Reihe wiederum alle in der gleichen Richtung orientiert, wobei aber die Orientierung von Reihe zu Reihe wechselt. Die Abstandsfläche der Krallen ist durch eine symmetrische Raute charakterisiert, die der Form eines Quadrates schon sehr nahekommt. Dadurch wird die Lasche breiter und die Lasteinleitung auf eine kürzere Länge konzentriert. In besonders gelagerten Fällen mag eine kurze Lasteinleitungslänge erwünscht sein, im allgemeinen kommt jedoch der Lasteinleitung auf einer größeren Länge mehr Bedeutung zu.

Aus der in Fig. 3 dargestellten Krallenlasche 3 läßt sich durch Faltung in Längs- oder Querrichtung eine doppelte Krallenlasche herstellen, die auf beiden Lagerflächen dann Krallen aufweist. Beidseitige Krallen einer Lasche lassen sich auch anformen wie aus Fig. 4 und Fig. 5 ersichtlich. Der Unterschied zur gefalteten Krallenlasche liegt darin, daß die Krallendichte pro Flächeneinheit geringer ist als bei der gefalteten.

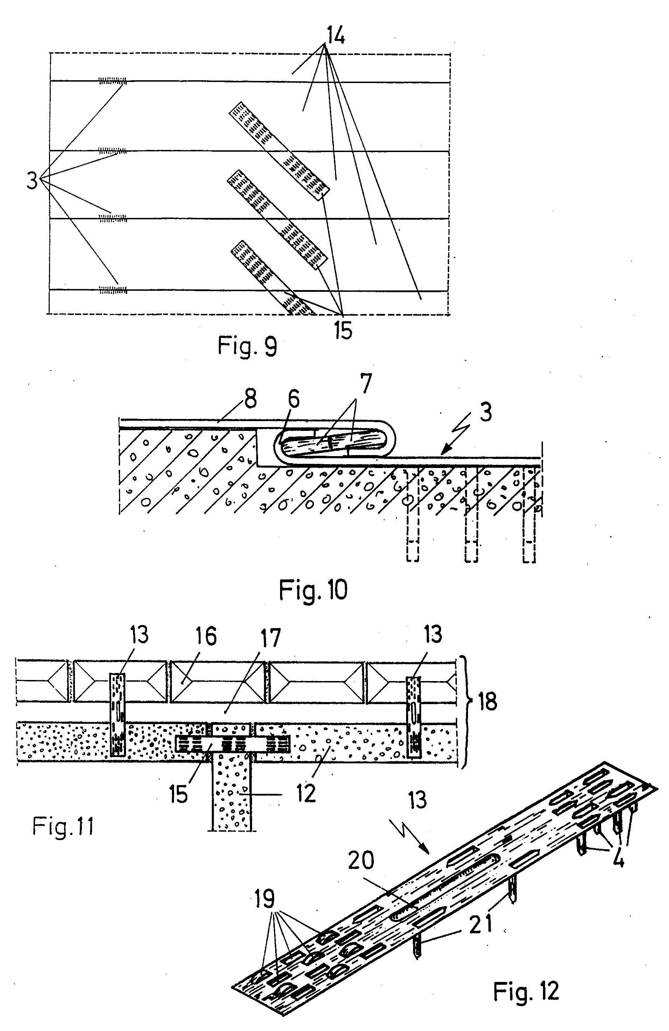

In Fig. 3 ist eine Krallenlasche abgebildet mit minimiertem Krallenabstand als Beispiel für eine Ausbildung, bei der die Hauptbeanspruchungsrichtung parallel zur Längserstreckung der Lasche vorgesehen ist. Deshalb ist auf einer Schmalseite dieser Lasche eine Anschlußeinrichtung 6 angeformt in Form einer gezahnten Öse. Auch andere Ausbildungen der Anschlußeinrichtung sind von Fall zu Fall vorteilhaft, wie am Beispiel eines Falzes auch aus Fig. 10 hervorgeht. Bei der ösenartigen Ausbildung läßt sich beispielsweise ein Zugglied 8 anschließen, dessen Ende ebenfalls eine ösenartige Anschlußeinrichtung in den Abmessungen besitzt, die ein Einfügen in die verzahnte Anordnung der Fig. 3 zuläßt. Die Verbindung von Zugglied 8 mit Krallenlasche 3 wird in diesem Fall einfach mittels eines Steckbolzens bewerkstelligt, der bei entsprechender Ausbildung der Öse und des Bolzens mit einem selbstschneidenden Gewinde durch Eindrehen in der Öse festgelegt werden kann.

Für eine besondere Ausgestaltung des erfindungsgemäßen Verbindungselementes, bei dem die streifenförmige Lasche vorzugsweise auf beiden Lagerflächen mit Krallen 4 ausgestattet ist, besteht ein besonderes Schutzbegehren. In Fig. 4 ist in einem Beispiel eine Krallenlasche 3 dargestellt, bei der wechselseitig die ausgestanzten Krallen 4 aus der Lasche hervortreten. Die Krallen 4 der Unterseite sind in einer schiefen Rautenform verteilt, wie es die gestrichelte Linie verdeutlichen soll. Die Abstandsfläche einer Kralle an der Oberfläche wird durch die gepunktete, schiefe Raute dargestellt. Gleichzeitig zeigt die gepunktete, schiefe Raute aber auch die Verteilung der Krallen 4 auf der Unterseite.

Bei der in Fig. 4 dargestellten Krallenlasche 3 sind die Spitzen der Krallen durch einseitig geneigte Schrägflächen gebildet. Die Besonderheit der Ausführung dieser Krallen liegt darin, daß die Neigung der Schrägflächen einer Längsreihe die gleiche ist, während die Orientierung der Neigung von Längsreihe zu Längsreihe wechselt. Dadurch wird das verdrängte Material im Gasbetongefüge wechselweise mehr auf die eine oder andere Seite einer Kralle 4 verteilt und ein seitliches Verlaufen der abgewinkelten Ausstanzung verursacht mit der erwünschten Wirkung, daß die zunächst in sich gerade Ausstanzung sich in eine gekrümmte Kralle umformt. Gleichzeitig läßt sich eine Minimierung des Krallenabstandes zur Seite hin erzielen, wodurch die äußere Form der Krallenlasche in vorteilhafter Weise die Form eines gestreckten Rechtecks annimmt.

Anschlußeinrichtungen 6, wie sie beispielhaft in den Fig. 3 und 10 dargestellt sind, sind auch auf mehreren Rändern der Krallenlaschen ausführbar. So kann es von Vorteil sein, daß die Anschlußeinrichtungen auf zwei zueinander senkrechten Rändern angeordnet werden, um an einer Bauteilecke die Zugglieder des Ringankers in den beiden Richtungen an der Krallenlasche anschließen zu können.

In Fig. 6 ist eine Lasche 15 mit einer krallenfreien Zone in den Stoßfugen der Deckenbauteile 14 und den Stoßfugen der Wandbauteile 12 über die Lagerfuge der Decke eingebaut. Der Schnitt durch die Decken-Außenwandauflagerung gibt in Querschnittsmitte den Ringanker 8 zu erkennen. Je nach den örtlichen Gegebenheiten mag es vorteilhafter sein, die Lasche 15 nahe der äußeren Wandfläche anzuordnen. Die aufgezeigte Verwendung der Lasche 15 als "Wand-Decken-Verbinder" zeigt die universelle Verwendung des Erfindungsgegenstandes auf.

Ausführungen der Lasche 15 mit zwei krallenfreien Zonen und ihre Verwendung sind aus Fig. 11 ersichtlich. Die Verwendung von Krallenlaschen 15 mit sehr großer krallenfreier Zone wird in Fig. 8 gezeigt. Die Lasche 15 überspannt die Stirn-Stoßfuge von Deckenbauteilen 14 aus Gasbeton und übernimmt die Funktion einer Biegebewehrung am Mittenaufleger der Deckenbauteile, wenn auf der Stirn-Stoßfuge die aus der Biegung aktivierten Druckkräfte übertragen werden. Versieht man, wie es die Erfindung vorsieht die Fuge zum Gasbeton mit einem geeigneten Verbundwerkstoff, so läßt sich das Moment verteilen und die Beanspruchung der Endverankerung durch die Krallen reduzieren.

Ein weiteres Beispiel der nützlichen Verwendung der krallenfreien Lasche 15 ist in Fig. 9 dargestellt. Die Längsfugen von Deckenbauteilen werden mit krallenfreien Laschen 15, entsprechend der Schubbeanspruchung der Fuge, unter einer Neigung von 45° zur Fuge überspannt und miteinander verbunden. Dadurch wirkt die krallenfreie Lasche 15 als schubsicherndes Verbindungsmittel, das erfindungsgemäß ein Zusammenwirken der Dach- und Deckenbauteile zu einer statisch wirksamen Scheibe sicherstellt.

Die Schubkräfte können aber auch, wie in Fig. 9 dargestellt, in den Längs-Stoßfugen der Dach- und Deckenplatten aufgenommen werden, wenn Krallenlaschen 3 mit beidseitigen Krallen angeordnet werden. Der Einbau solcher Elemente setzt allerdings voraus, daß Vorrichtungen vorhanden sind, die vor Ort ein Beiziehen der zu verbindenden Platte vorgenommen werden kann, sodaß sich die Krallen 4 gleichmäßig in die Längs-Stoßfuge eindrücken.

Sowohl eine Verdübelung mittels Krallenlaschen 3 in der Längsfuge, als auch mit Krallenlaschen 15 auf der Oberfläche von Deckenplatten ermöglichen die Herstellung einer Deckenscheibe aus Gasbeton-Deckenplatten in einer relativ einfachen, schnellen und rationellen Art und Weise.

Die Erfindung sieht unter anderem auch die Verwendung der Verbindungselemente zur Verankerung von Ringankern vor. In Fig. 10 ist ein Beispiel gezeigt, bei der eine Krallenlasche 3 mit einem Falz als Anschlußeinrichtung 6 verbunden wird, mit einem Zugglied 8 durch Doppelkeile 7, die ein Anspannen des als Ringanker ausgelegten Zuggliedes ermöglichen. Dabei kann das Zugglied 8 selbst am anderen Ende als Krallenlasche ausgebildet sein oder wiederum mit einem erfindungsgemäßen Verbindungselement verbunden werden.

Schließlich sieht die Erfindung auch die Verwendung von Krallenlaschen als Luftschichtanker 13 vor. Ein Beispiel für die Ausbildung eines Luftschichtankers zur Verbindung eines vorgesetzten Verblendmauerwerks 16 mit einem Gasbeton-Wandbauteil 12 über einen Luftspalt 17 hinweg zeigt Fig. 11.

In Fig. 12 ist ein Ausführungsbeispiel für den Luftschichtanker isometrisch dargestellt. Er besteht aus einer kurzen, streifenförmigen Krallenlasche mit einem Mittenteil, das zur Längsaussteifung eine Sicke 20 besitzt und einem, in die Lagerfugen des Verblendmauerwerks einbindenden Fortsatz mit Profilierstanzungen 19. Der dargestellte Luftschichtanker besitzt im Mitteilteil Krallen 4 im Abstand der Luftspaltdicke. Er ist so ausgebildet, daß er sowohl Zug- als auch Druckkräfte, die auf das Verblendmauerwerk 16 angreifen, auf das Wandbauteil aus Gasbeton 12 überträgt. Die Abstützungen 21 in Ankermitte haben einen Abstand der der Dicke des Luftspalts 17 entspricht. In der Regel ist hierfür das Standardmaß 5 cm vorgesehen. Dadurch, daß die Abstützungen in Form der Krallen eine Länge von mindestens 20 mm besitzen, wird erreicht, daß sowohl am Gasbeton-Wandbauteil 12, als auch am Verblendmauerwerk 16 ein Anliegen der vertikalen Flächen gegen die Abstützungen eintritt. Somit übernimmt der Luftschichtanker 13 auch die Funktion eines Distanzhalters, der die vorgesehene Dicke der Luftschicht sicherstellt.

Selbstverständlich lassen sich auch andere Ausführungsformen zur Herstellung eines Anschlags, sowohl auf der Seite zum Gasbetonbauteil, als auch zur Seite des Verblendmauerwerks, ausbilden, beispielsweise durch Abkantung der Ränder nach unten, um ein evtl. im Luftspalt sich niederschlagendes Kondenswasser zum Abtropfen nach unten zu veranlassen.

Der Erfindungsgegenstand in Form dünner Metall-Laschen, welche Ankerelemente besitzen, die auf einfache Weise in der Oberfläche von Gasbetonbauteilen festgelegt werden, ist ein neuartiges Verbindungselement, das in seiner universellen Anwendbarkeit neue Möglichkeiten des Bauens mit Gasbeton eröffnet. Es schafft die Möglichkeit, ohne Zementmörtel oder Beton, gewissermaßen im Trockenverfahren, ein Bauwerk aus Gasbeton zu erstellen, ohne Wartezeiten. Mit Hilfe des neuartigen Verbindungsmittels lassen sich Gasbeton-Decken- und Dachscheiben herstellen, in den Fugen bewehren und so ausbilden, daß sie zur räumlichen Aussteifung des Gesamtbauwerks herangezogen werden können, da auch ihre Verbindung mit Wandscheiben mit Hilfe der erfindungsgemäßen Verbindungselemente hergestellt werden kann.

Nicht nur die Verdübelung von Einzelbauteilen miteinander, sondern auch die 'vernähung' von Decken- und Wandscheiben mittels der erfindungsgemäßen Krallenlaschen ermöglichen ein rationelles, wirtschaftliches Bauen, zumal der Erfindungsgegenstand auch so gestaltet werden kann, daß er zur Verstärkung der aus Gasbetonbauteilen hergestellten Konstruktion genützt werden kann. Laschen mit krallenfreien Zonen lassen sich als zusätzliche Schubbewehrung für eine Deckenscheibe heranziehen, aber auch zur Abdeckung eines Biegemomentes in der Auflagerstoßfuge von Deckenplatten zur Reduzierung der Durchbiegung der Deckenplatte. Die neuartigen Verbindungselemente lassen sich mit Reaktionsharzen dazu verwenden, um eine zusätzliche Biegebewehrung an Ort und Stelle herzustellen, die durch Anordnung in den Stoßfugen genügend Überdeckung durch Gasbeton erhalten kann, um den Anforderungen des Brandschutzes zu genügen.

Die angeführten Beispiele dienen ausschließlich der Erläuterung des Erfindungsgegenstandes, auf Grund welcher aber kein Anspruch auf Vollständigkeit hinsichtlich der Verwendungsmöglichkeiten der erfindungsgemäßen Verbindungselemente erhoben wird. Die Universalität der Anwendbarkeit und die Tatsache, daß die Lasche an der Oberfläche der Gasbetonbauteile keine erwähnenswerte Vergrößerung der Fugendicken erfordert, - in besonders gelagerten Fällen können die Laschen auch oberflächlich eingelassen werden - erlauben die Ausbildung knirscher Fugen, trotz des Einbaus von Verbindungsmitteln. Die Nachteile, welche die Verwendung von Beton zur Vermörtelung von Fugen und Ringankern mit sich bringen, lassen sich mit Hilfe des neuartigen Verbindungselementes ausschließen. Erhöhung der Wirtschaftlichkeit beim Bauen mit Gasbeton und Verbesserung des Wärmedurchlaßwiderstandes der Baukonstruktion sind deshalb wesentliche Vorteile gegenüber dem heutigen Stand der Technik.

Liste der Symbole

| | |
|---|---|
| 1 | Lasche |
| d | Laschendicke |
| 2 | Ankerelement |
| 3 | Krallenlasche |
| 4 | Kralle |
| 5 | Halterung |
| 6 | Anschlußeinrichtung (Öse, Falz, oder dergl.) |
| 7 | Keil zum Verbinden der Krallenlasche mit dem Zugglied |
| 8 | Zugglied (Ringanker) |
| 9 | Bauteilstirnfläche |
| 10 | Betonstütze (anderes Bauteil) |
| 11 | Anschlußteil |
| 12 | Wandbauteil |
| 13 | Luftschichtanker |
| 14 | Deckenbauteil |
| 15 | Lasche mit krallenfreier Zone |
| 16 | Verblendmauerwerk |
| 17 | Luftschicht |
| 18 | Zweischalige Außenwand |
| 19 | Profilstanzungen |
| 20 | Aussteifende Sicke |
| 21 | Abstützung |

**Patentansprüche**

1. Verbindung bestehend aus Gasbetonbauteilen und einer Metallasche mit Ankerelementen, die in der Oberfläche der Gasbetonbauteile formschlüßig festgelegt sind, **dadurch gekennzeichnet,**

   - daß die Metallasche die Fuge zwischen den Gasbetonbauteilen überbrückt,
   - daß der Formschluß durch die Ankerelemente hergestellt ist, die in die Oberfläche des Gasbetonbauteils eingedrückt sind,
   - daß die Ankerelemente eine Länge vom 10 bis 20fachen der Laschendicke (d) besitzen,
   - daß die Ankerelemente (2) von rundem Querschnitt sind, in einer Größenordnung von 1,5 $d^2$ bis 3 $d^2$,
   - daß das Ankerelement (2) eine Dichte im Abstand besitzt, in der Größenordnung von 10 $d^2$ bis 20 $d^2$,
   - daß die Ankerelemente (2) mit einer Spitze ausgestattet sind,
   - daß die Lasche (1) gegebenenfalls an einem der schmalen Enden eine angeformte Halterung (5) aufweist und damit mit anderen Bauteilen verbindbar ist,
   - daß die Lasche (1,3) gegebenenfalls an ihren Rändern angeformte und/oder angeschweißte Anschlußeinrichtungen (6) in Form von Fälzen oder von verzahnbaren Ösen besitzt.

2. Verbindung nach Anspruch 1 **dadurch gekennzeichnet,** daß die Ankerelemente (2) durch Stanzung aus der Lasche (3) rechtwinklig angeformte Krallen (4) mit einer Krallenlänge von mindestens 15 d sind und die Anformung gegebenenfalls auf beiden Lageflächen vorgenommen ist.

3. Verbindung nach Anspruch 2 **dadurch gekennzeichnet,** daß die Krallen (4) vorzugsweise mit der Schmalseite, bedarfsweise mit der Breitseite, in die Hauptbeanspruchungsrichtung weist.

4. Verbindung nach einem der Ansprüche 1 bis 3 **dadurch gekennzeichnet,** daß die Lagerfläche der Lasche (1,3) ankerelementseitig mit einer aushärtbaren Schicht ausgestattet ist und mit dem Gasbeton in Verbund gebracht werden kann.

5. Verbindung nach einem der Ansprüche 1 bis 4 **dadurch gekennzeichnet,** daß die Metallasche aus korrosionsbeständigem Metall besteht.

6. Verbindung nach einem der Ansprüche 1 bis 5 **dadurch gekennzeichnet,** daß die Lasche (15) in der Längserstreckungsmitte mindestens eine ankerelementfreie Zone besitzt.

7. Verbindung nach einem der Ansprüche 1 bis 5 **dadurch gekennzeichnet,** daß die Lasche ein Wandelement aus Gasbeton mit einer tragenden Konstruktion, wie Stützen aus Stahlbeton oder Stahl, verbindet, indem die Halterung (5) formschlüßig in ein Anschlußteil (11) das im Bauteil fest verankert ist eingesetzt wird.

8. Verbindung nach einem der Ansprüche 1 bis 6 **dadurch gekennzeichnet,** daß die Lasche (15) unter einen Winkel von 45° die Fuge der Gasbetonbauteile überbrückt.

9. Verbindung nach einem der Ansprüche 1 bis 5 **dadurch gekennzeichnet,** daß die Lasche das Gasbetonbauteil mit einem Zugglied, z.B. Ringanker verbindet.

10. Verbindung nach einem der Ansprüche 1 bis 6 **dadurch gekennzeichnet,** daß die Lasche als Luftschichtanker (13) ausgebildet, eine Luftschicht (17) überbrückt und Gasbetonmauerwerk mit einer Vormauerwerkschale verbindet.

**Claims**

1. A connection comprising cellular concrete components and a metal plate with anchor elements which are positively fixed in the surface of the cellular concrete components, characterised in that
   - the metal plate bridges over the gap between the cellular concrete components,
   - the positive connection is made by the anchor elements which are impressed into the surface of the cellular concrete component,
   - the anchor elements are of a length of from 10 to 20 times the plate thickness (d),
   - the anchor elements (2) are of round cross-section, of an order of magnitude of $1.5\, d^2$ to $3d^2$,
   - the anchor element (2) is of a density in spacing, of the order of magnitude of $10d^2$ to $20d^2$,
   - the anchor elements (2) are provided with a point,
   - the plate (1) possibly has at one of the narrow ends a holding means (5) formed thereon and can be connected therewith to other components, and
   - the plate (1, 3) possibly has connecting means (6) which are formed thereon and/or welded thereto at its edges, in the form of folds or interlinkable eyes.

2. A connection according to claim 1 characterised in that the anchor elements (2) are claws (4) which are formed by stamping out of the plate (3) at a right angle, with a claw length of at least 15 d and the forming operation is possibly effected on both bearing surfaces.

3. A connection according to claim 2 characterised in that the claws (4) preferably face with the narrow side, if necessary with the wide side, in the main direction of loading.

4. A connection according to one of claims 1 to 3 characterised in that the bearing surface of the plate (1, 3) is provided with a hardenable layer on the anchor element side and can be bonded to the cellular concrete.

5. A connection according to one of clams 1 to 4 characterised in that the metal plate comprises corrosion-resistant metal.

6. A connection according to one of claims 1 to 5 characterised in that the plate (15) has at least one anchor element-free zone in the middle of its longitudinal extent.

7.  A connection according to one of claims 1 to 5 characterised in that the plate connects a wall element of cellular concrete to a load-carrying construction such as steel or reinforced concrete supports by the holding means (5) being positively inserted into a connecting portion (11) which is fixedly anchored in the component.

8.  A connection according to one of claims 1 to 6 characterised in that the plate (15) bridges over the gap between the cellular concrete components at an angle of 45°.

9.  A connection according to one of claims 1 to 5 characterised in that the plate connects the cellular concrete component to a draw member, for example a ring anchor.

10. A connection according to one of claims 1 to 6 characterised in that the plate is in the form of an air cavity-bridging anchor (13), bridges over an air cavity (17) and connects cellular concrete brickwork to a facing brickwork shell.

## Revendications

1.  Liaison comprenant des pièces de construction en béton cellulaire, ainsi qu'une patte métallique munie d'éléments d'ancrage verrouillés à demeure, par concordance de formes, dans la surface des pièces de construction en béton cellulaire,
    caractérisée par le fait
    - que la patte métallique coiffe le joint entre les pièces de construction en béton cellulaire,
    - que l'assemblage par conformation est établi par les éléments d'ancrage, qui sont enfoncés dans la surface de la pièce de construction en béton cellulaire,
    - que les éléments d'ancrage présentent une longueur comprise entre 10 et 20 fois l'épaisseur (d) de la patte,
    - que les éléments d'ancrage (2) sont de section transversale ronde, mesurant de l'ordre de 1,5 d² à 3 d²,
    - que l'élément d'ancrage (2) possède une densité d'espacement de l'ordre de 10 d² à 20 d²,
    - que les éléments d'ancrage (2) sont pourvus d'une pointe,
    - que la patte (1) comporte éventuellement, à l'une des extrémités étroites, un organe de retenue (5) ménagé solidairement, et peut par conséquent être reliée à d'autres pièces de construction,
    - que la patte (1, 3) possède éventuellement, sur ses bords, des dispositifs de rattachement (6) ménagés solidairement et/ou rapportés par soudage, et revêtant la forme d'agrafes repliées ou d'oeillets pouvant être munis d'une denture.

2.  Liaison selon la revendication 1, caractérisée par le fait que les éléments d'ancrage (2) sont des griffes (4) ménagées solidairement à angle droit par poinçonnage à partir de la patte (3), et présentant une longueur d'au moins 15 d, le façonnage solidaire étant éventuellement exécuté sur les deux surfaces de contact.

3.  Liaison selon la revendication 2, caractérisée par le fait que les griffes (4) sont orientées, de préférence par le côté étroit, au besoin par le côté large, dans la direction d'effort principal.

4.  Liaison selon l'une des revendications 1 à 3, caractérisée par le fait que la surface de contact de la patte (1, 3) est dotée d'une couche durcissable du côté des éléments d'ancrage, et peut être solidarisée avec le béton cellulaire.

5.  Liaison selon l'une des revendications 1 à 4, caractérisée par le fait que la patte métallique consiste en un métal résistant à la corrosion.

6.  Liaison selon l'une des revendications 1 à 5, caractérisée par le fait que la patte (15) possède, au centre de l'étendue longitudinale, au moins une zone dépourvue d'éléments d'ancrage.

7.  Liaison selon l'une des revendications 1 à 5, caractérisée par le fait que la patte relie un élément de paroi en béton cellulaire à une structure portante, telle que des montants de soutien en béton armé ou en acier, en insérant l'organe de retenue (5), par concordance de formes, dans une partie de rattachement (11) qui est fermement ancrée dans la pièce de construction.

8.  Liaison selon l'une des revendications 1 à 6, caractérisée par le fait que la patte (15) coiffe le joint des pièces de construction en béton cellulaire selon en angle de 45°.

9.  Liaison selon l'une des revendications 1 à 5, caractérisée par le fait que la patte relie la pièce de construction en béton cellulaire à un organe de traction, par exemple à une ancre annulaire.

10. Liaison selon l'une des revendications 1 à 6, caractérisée par le fait que la patte est réalisée sous la forme d'une ancre (13) pour vides sanitaires, enjambe un vide d'air (17), et relie une muraille en béton cellulaire à une coque de parement.

Fig. 1

Fig. 2

Fig. 5

Fig. 4

Fig. 6

Fig. 3

Fig. 7

Fig. 8

Fig. 9

Fig. 10

Fig. 11

Fig. 12